Europäisches Patentamt

European Patent Office

Office européen des brevets

(19)

(11) Publication number : **0 394 999 B1**

(12) **EUROPEAN PATENT SPECIFICATION**

(45) Date of publication of patent specification :
01.03.95 Bulletin 95/09

(51) Int. Cl.$^6$ : **H04N 1/40,** H04N 1/028

(21) Application number : **90107837.8**

(22) Date of filing : **25.04.90**

(54) **Shading distortion compensating structure of a light convergence reading scanner.**

(30) Priority : **26.04.89 JP 106293/89**
**26.04.89 JP 106294/89**

(43) Date of publication of application :
**31.10.90 Bulletin 90/44**

(45) Publication of the grant of the patent :
**01.03.95 Bulletin 95/09**

(84) Designated Contracting States :
**DE FR GB**

(56) References cited :
**PATENT ABSTRACTS OF JAPAN vol. 12, no.
314 (E-649) 25 August 1988, & JP-A-63 078661**

(56) References cited :
**PATENT ABSTRACTS OF JAPAN vol. 10, no.
341 (P-517) 18 November 1986, & JP-A-61
143781**
**PATENT ABSTRACTS OF JAPAN vol. 9, no. 31
(E-295)(1754) 09 February 1985, & JP-A-59
175174**

(73) Proprietor : **SHARP KABUSHIKI KAISHA
22-22 Nagaike-cho
Abeno-ku
Osaka (JP)**

(72) Inventor : **Shimonaga, Sadaaki
178-1, Kodono-cho,
Nara-shi
Nara-ken (JP)**

(74) Representative : **TER MEER - MÜLLER -
STEINMEISTER & PARTNER
Mauerkircherstrasse 45
D-81679 München (DE)**

EP 0 394 999 B1

## Description

## BACKGROUND OF THE INVENTION

### 1. Field of the Invention

The present invention relates to a shading distortion compensating structure of a light convergence reading scanner which comprises
- a light source for illuminating a band-shaped region on an original,
- a lens for converging the light reflected by the original,
- reading means having a plurality of light receiving elements linearly disposed for receiving the light converged by the lens and converting the quantity of the light into electric signals on the basis of every light receiving element to successively output the signals,
- said light source being composed of a spot light source array having a plurality of LEDs linearly disposed, and
- regulating means for decreasing the quantity of the light of said LEDs positioned in the center portion of said LED-array so that the reading means receives a quantity of light at which the shading distortion is compensated.

### 2. Description of the Related Art

Such a shading distortion compensation structure is known from JP-61143781.

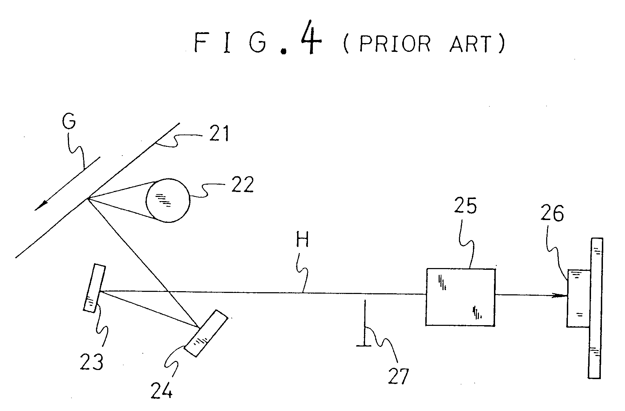

In a conventional light convergence reading scanner, as shown in Fig. 4 as the entire structure, while an original 21 of Japanese standard size such as A4 or B4 is being moved in the direction shown by an arrow G, light H is directed to the original 21 from a light source 22 employing a light emitting element such as an LED.

The light H reflected by the original 21 is changed in its optical path through a first mirror 23, a second mirror 24 and the like and converged by a lens 25. The converged light is read by a reading sensor 26 such as a CCD image sensor.

The light source 22 is a line light source shaped like a band extending in the direction orthogonal to the original moving direction G, while the first mirror 23 and the second mirror 24 extend in parallel with the light source 22.

The lens 25, image reducing means of an optical system, is an axially symmetric lens employed in an ordinary camera lens to reduce an incident image in all the directions.

The reading sensor 26 has its light receiving elements disposed in parallel with the light source 22. For example, a CCD image sensor has approximately 2000 light receiving elements disposed, and it photoelectrically trnasfer the quantity of light every light receiving element has received for 5 milliseconds to successively output signals in series from one side of the arrangement of the light receiving elements to the other.

In such a light convergence reading scanner, the lens 25, or the image reducing means of an optical system is employed. Thus, the quantity of light in the peripheral portion of the lens 25 after it has passed through the lens 25, or the quantity of light in the peripheral portion of the reading sensor, is reduced, and hence there arises the so-called "shading distortion" that the light receiving elements placed in the center portion of the reading sensor 26 and the light receiving elements placed in the peripheral portion thereof are different in the levels of the respective output signals.

To compensate the shading distortion, the conventional light convergence reading scanner is provided with a light blocking plate 27 for regulating the quantity of light before the lens 25, as shown in Fig. 4.

The light blocking plate 27 is positioned symmetrically related to the optical axis of the light H, and is an opaque plate shaped like a curved surface of a cylinder cut in half. The quantity of light in the center portion of the lens 25 is reduced with the light blocking plate 27, so that the quantity of light incident on the reading sensor 26 is uniformed between the center portion and the peripheral portion.

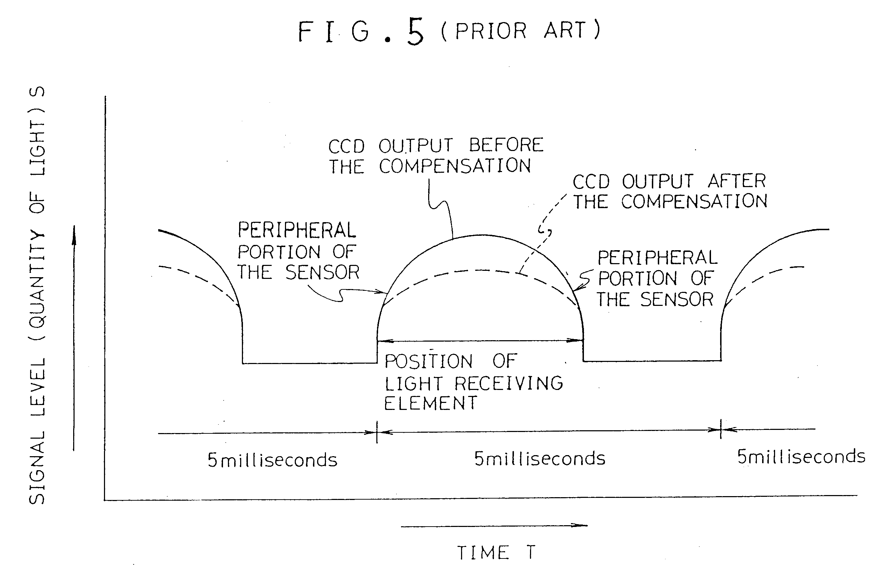

Fig. 5 is a graph showing the relations between the time T and the level S of the output signals from the reading sensor 26 which is, for example, a CCD image sensor.

With the CCD image sensor, the quantity of light received by every light receiving element and accumulated for 5 milliseconds is photoelectrically transferred and outputted as mentioned above, and hence the CCD image sensor outputs signals at intervals of 5 milliseconds serially from one side of the linearly disposed light receiving elements to the other. As a result, the time axis T corresponds to the positions on the disposed light receiving elements.

A solid line in Fig. 5 represents the level S of the output signal from the CCD image sensor before the shading distortion is compensated by the light blocking plate 27. The output of the CCD image sensor before the compensation drops in the peripheral portion of the sensor as shown in Fig. 5. A broken line represents the level S of the output signal of the CCD image sensor after the output in the center portion of the sensor is reduced by the light blocking plate 27, that is, the shading distortion is compensated.

The position to which the light blocking plate 27 is attached is regulated allowing for the waveform of the output signal of the sensor shown in Fig. 5, when the aforementioned CCD image sensor is used for the reading sensor 26.

However, the position of the aforementioned light blocking plate 27 must be regulated in an extremely delicate manner and is difficult to fix, and moreover, disadvantageously, it is easily disordered by the vibration of the equipments.

With the light blocking plate 27, since the quantity of light is generally reduced to compensate the shading distortion, the level S of the output signal generally lowers, and hence it is likely that the noise exerts more influences.

Prior art embodiments in which the quantity of light of the light source 22 is regulated without using the light blocking plate 27 is disclosed in Unexamined Japanese Patent Publication No. 175174/1984, Unexamined Japanese Patent Publication No. 33070/1986, Unexamined Japanese Patent Publication No. 56574/1986 and Unexamined Japanese Patent Publication No. 32764/1987. In the first prior art embodiment, a light source array is so disposed that the end of the array is dense, the center portion is sparse and the portion therebetween is at the intermediate pitch. In the second prior art embodiment, the irregularity of the quantity of light in the light source is compensated by changing the reflection rate on the mirror surface. In the third prior art embodiment, the quantity of laser light is changed so as to eliminate the shading distortion. In the fourth prior art embodiment, the reference white image is read before reading is started, and accordingly the quantity of emitted light in the light source is changed.

The known shading distortion compensating structure disclosed by the above mentioned JP 61143781 includes a LED array, wherein to each LED a respective resistor and transistor are connected in series. The decrease in the quantity of the peripheral light arrising according to the cosine law in the case of a single lense is corrected by adjusting the resistors. However, using a single resistor for each LED disadvantageously increases the space of the LED array in the light source.

SUMMARY OF THE INVENTION

The object of the present invention is to overcome the aforementioned disadvantage, and to provide a shading distortion compensating structure of a light convergence reading scanner in which the quantity of the emitted light in the center portion of the band-shaped light source can be reduced, so that the shading distortion can be compensated without using a light blocking plate and the space of the LED array in the light source can be decreased.

The above object is solved by a shading distortion compensating structure of a light convergence reading scanner comprising a light source for illuminating a band-shaped region on an original, a lens for converging the light reflected by the original, reading means having a plurality of light receiving elements linearly disposed for receiving the light converged by the lens and converting the quantity of the light into electric signals on the basis of every light receiving element to successively output the signals, said light source being composed of a spot light source array having a plurality of LEDs linearly disposed, and regulating means for decreasing the quantity of the light of said LEDs positioned in the center portion of said LED-array' so that the reading means receives a quantitiy of light at which the shading distortion is compensated, which is characterized in that said LED array comprises LED groups each of which includes at least three of said LEDs connected in series, wherein said LED groups are respectively connected in series to resistances having different values.

With the aforementioned shading distortion compensating structure of a light convergence reading scanner, the light of a spot light source is directed to an original, reflected by the same and converged by a lens. The quantity of the converged light is converted into an electric signal by reading means on the basis of each light receiving element and successively outputted.

At this time, the spot light source positioned in the center portion of the spot light source array is regulated by the regulating means so as to reduce the quantity of the emitted light, and hence the quantity of the light incident on the light receiving elements in the center portion of the reading means and the light receiving elements in the opposite portions thereof is uniformed.

Thus, the shading distortion can be compensated without using a light blocking plate as in the prior art.

BRIEF DESCRIPTION OF THE DRAWINGS

Fig. 1(A) is a diagram for explaining in detail a light source in an embodiment according to the present invention;

Fig. 1(B) is a graph showing the relations between the position where an original is read and the level of an output signal of a light receiving element in the embodiment according to the present invention;

Fig. 2 is a diagram for explaining the entire structure of the embodiment according to the present invention;

Fig. 3 is a diagram showing an electric circuit for regulating the quantity of light of an LED;

Fig. 4 is a diagram for explaining the entire structure of a conventional light convergence reading scanner; and

Fig. 5 is a graph showing the relations between the time and the output signal level in the conventional reading sensor.

## DESCRIPTION OF THE PREFERRED EMBODIMENT

"Shading distortion" used in this invention means the difference in the level of the output signals between light receiving elements positioned in the center portion of reading means and light receiving elements positioned in the peripheral portion of the same, and "to compensate the shading distortion" means that the difference is reduced as much as possible.

As a spot light source array in this invention, the one that has a plurality of spot light sources linearly disposed to direct the light to a band-shaped area on an original in the direction orthogonal to the original sending direction like may be used. As the spot light sources, light emitting elements such as LEDs may be used.

As a lens in this invention, an axially symmetric lens like a single lens or a composite lens as used in a conventional facsimile may be used.

As the reading means in this invention, the one that has a plurality of light receiving elements linearly disposed and the quantity of the light received by the light receiving elements for a specified period of time is photoelectrically transferred into signals to successively output may be used; for example, a sensor like a CCD image sensor employed in a conventional facsimile is appropriately used.

As the regulating means in this invention, the one that can regulate (reduce) the quantity of the light emitted by the spot light sources may be used; for example, a resistance is used.

Now, the present invention will be explained in detail in the context of embodiments shown in the accompanying drawings. It is not intended that the present invention be limited to the explanation.

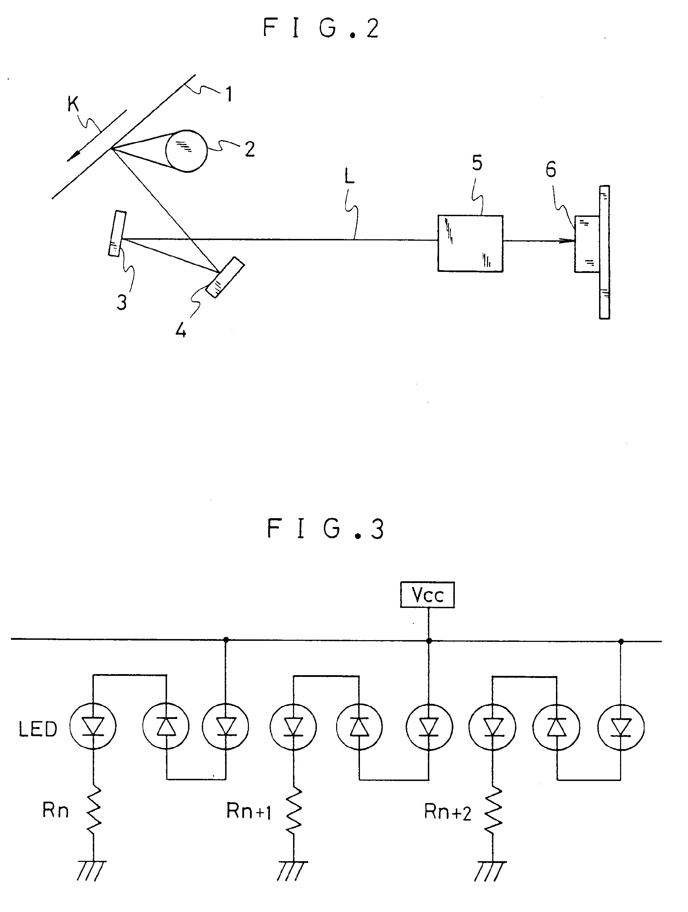

In Fig. 2, an original 1 of the Japanese standard size such as A4 or B4 is moved in the direction shown by an arrow K, and a light source 2 illuminates the original 1. First and second mirrors 3, 4 are provided for changing the optical path of the light L reflected by the original 1, and a lens 5 converges the light L. A CCD image sensor 6 reads the light L converged by the lens 5.

The light source 2, though explained in detail hereinafter, is a band-shaped line light source having LEDs disposed in the direction orthogonal to the direction of the arrow K. The first and second mirrors 3, 4 are placed in parallel with the disposed LEDs of the light source 2.

The lens 5 is an axially symmetric lens used as an ordinary camera lens and reduces an incident image in all the directions.

The CCD image sensor 6 has light receiving elements linearly disposed in parallel with the light source 2 to read the illuminated portion of the original 1. With the CCD image sensor which moves the original of B4 in size in the vertical (longitudinal) direction and reads the same, the light receiving elements are disposed into an array in the direction orthogonal to the original moving sending direction. Assuming that the original is read by dividing 1 millimeter into 8 pixels in the original of B4 size having the lateral width of 256 mm, it is found from

256 mm x 8 pixels = 2048 pixels

that the array requires 2048 pixels. To make a single pixel correspond to a single light receiving element, assuming that the length of a single light receiving element is approximately 14 μm, an equation is obtained as follows;

14 μm x 2048 (light receiving elements) = approximately 29 mm

and it finds that the linear array is approximately 29 mm in length. The thorough length of the CCD image sensor 6 equals the length of the aforementioned array added by the length of an outer peripheral unit; approximately, 40 to 42 mm.

The CCD image sensor 6 photoelectrically transfers the quantity of the light received by the light receiving elements for 5 milliseconds to shift the resultant signals into a shift register, and it serially outputs the signals from one side of the array to the other every time a transfer clock signal is applied from an external unit.

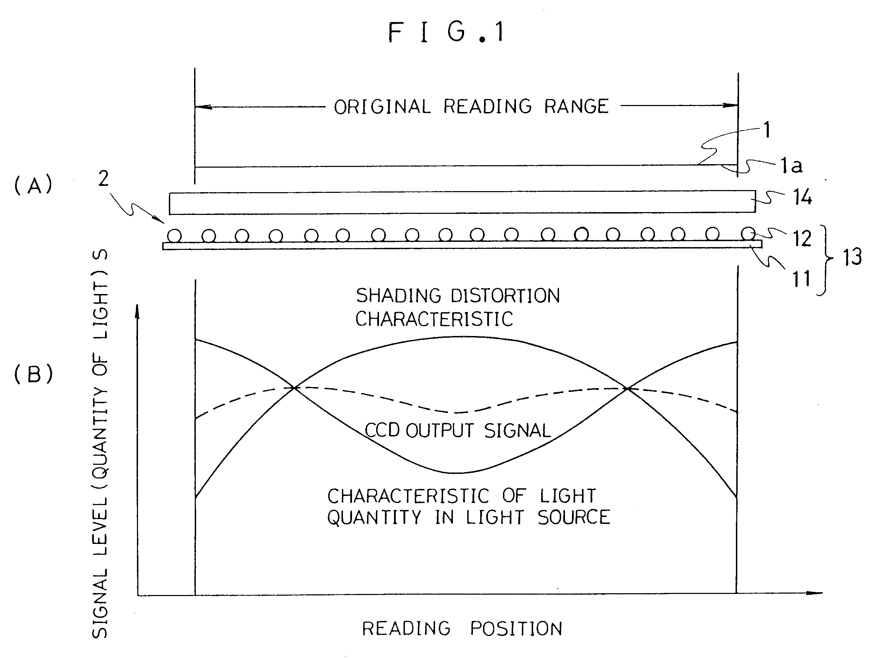

Fig. 1(A) is a diagram for explaining the light source in detail, Fig. 1(B) is a graph showing the relations between the position where the original is read corresponding to the array of the light receiving elements of the CCD image sensor 6 and the level S of the output signals of the light receiving elements, and Fig. 3 is a diagram showing an electric circuit for regulating the quantity of the light emitted by the LEDs of the light source 2. In Fig. 1(B), to simplify the explanation, the level S of the output signals of the light receiving elements and the quantity of the light of the light source 2 which are in relation with each other are together represented on the vertical axis, while the reading position corresponding to the original reading range in Fig. 1(A) is represented on the horizontal axis.

As shown in Fig. 1(A), the light source 2 is put in parallel with an original face 1a of the original 1 and is composed of an LED array 13 having a plurality of LEDs 12 linearly disposed on a substrate 11 in the direction orthogonal to the moving direction K (see Fig. 2) of the original 1 and a diverging/converging lens 14 placed closed to the original 1.

The pitch at which the LEDs 12 are disposed in the LED array 13, when standard LEDs which is 2 to 2.5 mm in diameter are used, is about 3mm. Thus, when the original of B4 size having the lateral width of 256 mm is illuminated, the required LEDs are obtained by an equation as follows;

256 - 3 = about 85

and further to illuminate the region broader than the original width, about 90 to 100 of LEDs 12 are linearly disposed in the LED array 13.

The LEDs 12 disposed in the LED array 13 are divided into many trios each of which are connected in series as shown in Fig. 3, and resistances Rn, Rn+1, Rn+2, ..., are connected to each of the trios of the LEDs 12 in series. Thus, the quantity of the light emitted by the LEDs 12 can be regulated by setting the values of the resistances Rn, Rn+1, Rn+2, ..., respectively.

In this way, the quantity of the light emitted by the LEDs 12 in the center portion of the LED array 13 is so reduced that the shading distortion of the CCD image sensor can be compensated. Thus, the values of the resistances Rn, Rn+1, Rn+2, ... are set so that the quantity of the light of the light source 2 is reversed to the shading distortion in characteristic.

Though the above example is the case where three of the LEDs are connected in series and also connected to a resistance R, a single resistance R may be connected to a single LED 12, or more than four LEDs are connected in series and also connected to the resistance R. However, connecting a single R to every LED 12 makes many resistances R required, and the problem on the disposing space arises. A single LED 12 lights up with direct current of about 1.4 V, and hence when three of the LEDs 12 are connected in series, the voltage drop is about 4.2 V and the supply voltage Vcc of 5V or more is required. On the other hand, the supply voltage Vcc is usually the current voltage of approximately 5 V to 12 V, and generally three of the LEDs 12 or six to eight of them at most are connected in series and also connected to a single resistance R.

With the structure, as shown in Fig. 1(B), even when the shading distortion characteristic of the level S of the output signals of the CCD image sensor 6 is represented by a curve gradually rising, the characteristic of the quantity of the light from the light source 2 is represented by a curve gradually falling reverse to the shading distortion characteristic, and thus both the characteristics are canceled, so that the waveform of the output from the CCD image sensor 6 is flat as shown by a broken line, keeping the output signal level S constant.

In this way, the value of the resistance R is set so that the quantity of the light emitted by the LEDs 12 positioned in the center portion of the LED array 13, while the characteristic of the quantity of the light emitted by the LED array 13 is reversed to the characteristic of the shading distortion to compensate the shading distortion. Thus, a light blocking plate is unnecessary.

As has been described, according to the present invention, a spot light source is provided with regulating means, and the quantity of the light emitted by the spot light source is regulated by the regulating means so that the quantity of the light at which the shading distortion is compensated is applied to the reading means, whereby a light blocking plate is unnecessary and the complicated regulation of the light blocking plate and the like is also unnecessary.

Since there is no regulating unit like the light blocking plate, the structure of this embodiment can provide the extremely stable quantity of light to the reading means even if some vibration arises.

## Claims

1. A shading distortion compensating structure of a light convergence reading scanner, comprising:
   - a light source (2) for illuminating a band-shaped region on an original,
   - a lens (5) for converging the light reflected by the original,
   - reading means (6) having a plurality of light receiving elements linearly disposed for receiving the light converged by the lens (5) and converting the quantity of the light into electric signals on the basis of every light receiving element to successively output the signals,
   - said light source (2) being composed of a spot light source array having a plurality of LEDs linearly disposed, and
   - regulating means for decreasing the quantity of the light of said LEDs positioned in the center portion of said LED-array so that the reading means (6) receives a quantity of light at which the shading distortion is compensated,

   **characterized** in that said LED array (13) comprises LED groups each of which includes at least three of said LEDs (12) connected in series, wherein said LED groups are respectively connected in series to resistances (Rn) having different values.

2. The structure according to claim 1, wherein said LEDs (12) are disposed at specified intervals in said LED array.

3. The structure according to claim 1 or 2, wherein said LEDs in said LED array are disposed at equal distances.

4. The structure according to one of the preceding claims, wherein the regulating means comprises that the values of the resistances (Rn) are set so that the characteristic of the quantity of light emitted by the LED array (13) is inverse to the characteristic of the shading distortion.

5. The structure according to one of the preceding claims, wherein each of said LED groups comprises at most eight LEDs (12).

6. The structure according to claim 1, wherein said reading means (6) is a CCD image sensor.

**Patentansprüche**

1. Einrichtung zum Ausgleich von Schattenverzerrungen bei einem Lichtkonvergenz-Leseabtaster, mit:
   - einer Lichtquelle (2) zum Beleuchten eines bandförmigen Bereichs auf einer Vorlage;
   - einer Linse (5) zum Konvergieren des von der Vorlage reflektierten Lichts;
   - einer Leseeinrichtung (6) mit mehreren Licht empfangenden Elementen, die linear angeordnet sind, um das von der Linse (5) konvergierte Licht zu empfangen und um die Menge des Lichts für jedes Licht empfangende Element in elektrische Signale umzuwandeln, um die Signale der Reihe nach auszugeben;
   - wobei die Lichtquelle (2) aus einem Punktlichtquelle-Array mit mehreren linear angeordneten LEDs besteht; und
   - einer Einstelleinrichtung zum Verringern der Menge des Lichts der im mittleren Bereich des LED-Arrays angeordneten LEDs auf solche Weise, daß die Leseeinrichtung (6) eine solche Menge an Licht empfängt, bei der die Schattenverzerrung kompensiert ist;
   **dadurch gekennzeichnet, daß**
   - das LED-Array (13) LED-Gruppen enthält, von denen jede mindestens drei in Reihe geschaltete LEDs (12) enthält, wobei die LED-Gruppen jeweils mit Widerständen (Rn) mit verschiedenen Werten in Reihe geschaltet sind.

2. Einrichtung nach Anspruch 1, bei der die LEDs (12) im LED-Array mit vorgegebenen Abständen angeordnet sind.

3. Einrichtung nach Anspruch 1 oder Anspruch 2, bei der die LEDs im LED-Array mit gleichen Abständen angeordnet sind.

4. Einrichtung nach einem der vorstehenden Ansprüche, bei der die Einstelleinrichtung so aufgebaut ist, daß die Werte der Widerstände (Rn) so eingestellt sind, daß die Charakteristik der Menge des vom LED-Array (13) emittierten Lichts umgekehrt zur Charakteristik der Schattenverzerrung ist.

5. Einrichtung nach einem der vorstehenden Ansprüche, bei der jede der LED-Gruppen höchstens acht LEDs (12) enthält.

6. Einrichtung nach Anspruch 1, bei der die Leseeinrichtung (6) ein CCD-Bildsensor ist.

**Revendications**

1. Structure de compensation de distorsion d'effet d'ombre d'un balayeur de lecture à convergence de lumière, comprenant:
   - une source de lumière (2) pour éclairer une zone en forme de bande sur un original,
   - une lentille (5) pour faire converger la lumière réfléchie par l'original,
   - des moyens de lecture (6) comportant une pluralité d'éléments de réception de lumière disposés pour recevoir la lumière convergée par la lentille (5) et convertir la quantité de lumière en signaux électriques sur la base de chaque élément de réception de lumière pour émettre ensuite ces signaux successivement,
   - ladite source de lumière (2) étant composée d'un ensemble de sources de points lumineux présentant une pluralité de LEDs disposées linéairement, et
   - des moyens de régulation pour diminuer la quantité de la lumière desdites LEDs positionnées dans la partie centrale dudit ensemble de LEDs de sorte que le moyen de lecture (6) reçoit une quantité de lumière à partir de laquelle la distorsion d'effet d'ombre est compensée,
   caractérisée en ce que
   ledit ensemble de LEDs (13) comprend des groupes de LEDs comprenant chacun au moins trois desdites LEDs (12) connectées en série, lesdits groupes de LEDs étant respectivement connectés en série à des résistances (Rn) présentant des valeurs différentes.

2. Structure selon la revendication 1, selon laquelle lesdites LEDs (12) sont disposées à des intervalles spécifiés dans ledit ensemble de LEDs.

3. Structure selon la revendication 1 ou 2, selon laquelle lesdites LEDs dans ledit ensemble de LEDs sont disposées à des distances égales.

4. Structure selon l'une quelconque des revendications précédentes, selon laquelle le moyen de régulation implique que les valeurs des résistances (Rn) sont réglées de telle sorte que la caractéristique de la quantité de lumière émise par l'ensemble de LEDs (13) est l'inverse de la caractéristique de la distorsion d'effet d'ombre.

5. Structure selon l'une quelconque des revendications précédentes, selon laquelle chacun desdits groupes de LEDs comprend au plus huit LEDs (12).

6. Structure selon la revendication 1, caractérisé en ce que ledit moyen de lecture (6) est un capteur d'images à CCD.

F I G .1

ORIGINAL READING RANGE

1
1a

(A)    2
14
12
13
11

SHADING DISTORTION CHARACTERISTIC

(B)

CCD OUTPUT SIGNAL

CHARACTERISTIC OF LIGHT QUANTITY IN LIGHT SOURCE

SIGNAL LEVEL (QUANTITY OF LIGHT) S

READING POSITION

EP 0 394 999 B1

# F I G . 2

# F I G . 3

F I G . 4 (PRIOR ART)

# FIG.5 (PRIOR ART)

CCD OUTPUT BEFORE
THE COMPENSATION

CCD OUTPUT AFTER
THE COMPENSATION

PERIPHERAL
PORTION OF
THE SENSOR

PERIPHERAL
PORTION OF
THE SENSOR

POSITION OF
LIGHT RECEIVING
ELEMENT

SIGNAL LEVEL (QUANTITY OF LIGHT) S

5milliseconds      5milliseconds      5milliseconds

TIME T